# EUROPÄISCHE PATENTSCHRIFT

(11) **EP 3 182 860 B1**
(45) Veröffentlichungstag und Bekanntmachung des Hinweises auf die Patenterteilung: **01.12.2021**
(21) Anmeldenummer: 15754142.6
(22) Anmeldetag: 18.08.2015
(51) Int. Cl.: A47B 88/40

(54) **MÖBEL MIT SENSOREINRICHTUNG**
PIECE OF FURNITURE WITH SENSOR DEVICE
MEUBLE MUNI D'UN DISPOSITIF DE DÉTECTION

(30) Priorität: 21.08.2014 DE 202014103874 U
(43) Veröffentlichungstag der Anmeldung: 28.06.2017
(60) Teilanmeldung: 21172481.0
(73) Patentinhaber: Grass GmbH, 6973 Höchst (AT)
(72) Erfinder: LIEBSCH, Ronald, 88239 Primisweiler (DE)
(74) Vertreter: Otten, Roth, Dobler & Partner mbB Patentanwälte
(86) Internationale Anmeldenummer: PCT/EP2015/068880
(87) Internationale Veröffentlichungsnummer: WO 2016/026824

(56) Entgegenhaltungen:
- WO-A1-97/41458
- WO-A2-2007/124754
- DE-A1-102009 052 537
- DE-B3-102008 023 962
- DE-U1-202010 005 412

## Beschreibung

### Stand der Technik

Auf dem Gebiet des Möbelbaus ist der Einsatz von Sensoreinrichtungen zur Kontrolle einer Funktion des Möbels in verschiedensten Ausführungen bekannt. Entsprechende Sensoreinrichtungen können beispielsweise mit einem Aktor wie z.B. einer Antriebseinheit elektrisch bzw. elektronisch verbunden sein. Der Aktor kann zum Bewegen eines bewegbaren Möbelteils wie beispielsweise einer Türe, einer Schublade oder einer Möbelklappe vorgesehen sein. Ebenso kann die Sensoreinrichtung für eine Bedienung einer Verriegelungseinrichtung bereitgestellt sein. Dabei ist häufig eine Sensoreinrichtung für ein einzelnes Möbelteil eines Möbels vorgesehen, das bewegbar oder in anderer Hinsicht in seinem Zustand veränderbar ist. Es sind jedoch auch Ausführungen bekannt, bei denen eine Sensoreinrichtung für eine Gruppe von mehreren, oftmals ähnlichen Möbelteilen vorgesehen ist, wobei die Sensoreinrichtung einen Überwachungsbereich aufweist, der für eine Überwachung durch die Sensoreinrichtung in mehrere Teilbereiche aufteilbar ist, um jedem Teilbereich jeweils eines der Möbelteile zuzuordnen. Eine Betätigungsaktion, z.B. ein Hineinreichen in einen entsprechenden Teilbereich, lässt sich von der Sensoreinrichtung in ein Betätigungssignal für einen Aktor eines zugeordneten Möbelteils umwandeln, um das Möbelteil zu betätigen. Die Betätigung kann z.B. ein Öffnen und Schließen einer Schublade sein.

Aus der WO 2005/079630 A1 ist ein Möbel bestehend aus einem Möbelkorpus und daran angeordneten Schubladen bekannt, welches eine Sensorvorrichtung zum Erfassen von Bewegungen eines außerhalb des Möbels befindlichen Objekts umfasst, wobei die Sensorvorrichtung an der Blende der Schublade angeordnet ist.

### Aufgabe und Vorteile der Erfindung

Der Erfindung liegt die Aufgabe zugrunde, ein alternatives Möbel bereitzustellen, das in unauffälliger und platzsparender Weise für eine vergleichsweise leichte und insbesondere berührungslose Betätigung ausgebildet ist.

Die Aufgabe wird durch ein Möbel mit den Merkmalen des Anspruchs 1 gelöst.

Bevorzugte und vorteilhafte Ausführungen der Erfindung sind in den abhängigen Ansprüchen angegeben.

Die Erfindung geht von einem Möbel mit einer Sensoreinrichtung aus, wobei die Sensoreinrichtung eine Elektrodenanordnung umfasst, die an einem Möbelabschnitt des Möbels derart angeordnet ist, dass mit der Elektrodenanordnung mit oder ohne Berührung der Elektrodenanordnung bzw. des Möbels Veränderungen eines elektrischen Feldes in einem Umgebungsbereich, der an einer Seite des Möbels gelegen ist, erfassbar sind und dass die Sensoreinrichtung eine Erfassungseinheit umfasst, mit der mittels einer erfassten Veränderung des elektrischen Feldes eine Position eines Körpers im Umgebungsbereich des Möbels bestimmbar ist. Die Elektrodenanordnung kann dabei ein oder mehrere Elektroden aus einem elektrisch leitfähigen Material, zum Beispiel einem Metall, umfassen.

Die Elektroden sind dazu vorgesehen, eine Änderung eines elektrischen Feldes im Umgebungsbereich zu erfassen, wenn ein dielektrischer Körper in die Umgebung der Elektroden hinein- oder herausbewegt wird. Die Erfindung bietet den Vorteil, dass sich dadurch eine einfache und platzsparende Lösung für eine insbesondere berührungslose Betätigung realisieren lässt.

Der Erfindung liegt die Erkenntnis zugrunde, dass der menschliche Körper - u.a. wegen seines hohen Wasseranteils - in einem statischen elektrischen Feld vergleichsweise leicht elektrisch polarisierbar ist. In einem freien Raumbereich, der von einem elektrostatischen Feld erfüllt ist, kann daher ein Körperteil einer Person eine elektrostatische Feldverteilung messbar bzw. erfassbar verändern. Ein Körperteil ist daher als dielektrischer, polarisierbarer Körper geeignet, dessen Position im Umgebungsbereich des Möbels bestimmbar und erfassbar ist. Dabei ist die Elektrodenanordnung vorzugsweise derart geometrisch aufgebaut, dass sich mehrere verschiedene Positionen des Körperteils voneinander und gegebenenfalls in Bezug auf die Elektrodenanordnung durch einen entsprechenden Einfluss auf die elektrische Feldverteilung unterscheiden und insbesondere quantitativ bestimmen lassen. Ein erfindungsgemäßes Möbel lässt sich damit vorteilhaft für eine berührende wie auch für eine berührungslose Betätigung ausbilden.

Für eine berührungslose Betätigung lässt sich am Möbel eine elektrische Feldverteilung bereitstellen, die mit einer Feldstärke über eine äußere Oberfläche des Möbelabschnitts in einen insbesondere außerhalb des Möbels liegenden Umgebungsbereich hinausreicht. Damit ist eine vom Körper, z.B. von einem menschlichen Körperteil, erzeugte Feldänderung mit der Elektrodenanordnung erfassbar, ohne dass ein Berühren oder Hineinreichen am Möbel nötig ist.

Eine entsprechende Änderung des elektrischen Feldes kann dabei eine Änderung einer Ladung an ein oder mehreren Elektroden der Elektrodenanordnung erzeugen. Mit der Erfassungseinheit kann eine Änderung eines Ladungszustands an ein oder mehreren Elektroden z.B. anhand von Strömen mess- und erfassbar sein. Vorzugsweise ist die Erfassungseinheit derart ausgebildet, dass damit gemessene Zustandsänderungen an den Elektroden - z.B. Änderungen ihrer Ladung - der Elektrodenanordnung auswertbar sind, die z.B. in Form von Signalen, insbesondere digitalen Daten an z.B. eine Kontrolleinrichtung bzw. z.B. einen Aktor wie z.B. einem Elektroantrieb übermittelbar sind.

Eine Elektrode der Elektrodenanordnung ist vorzugsweise aus einem elektrisch leitfähigen Material hergestellt, das beispielsweise ein Metall, ein Halbleiter, ein Kunststoff oder gegebenenfalls auch eine Kombination aus mehreren verschiedenen leitenden Materialien sein kann. Das Material kann z.B. kristallin aufgebaut sein oder auch ein z.B. amorphes geordnetes Kunststoffmaterial sein.

Eine Elektrode der Elektrodenanordnung kann als Abtastelektrode zur Erfassung der elektrischen Feldverteilung im Umgebungsbereich vorgesehen sein. Um eine elektrische Feldverteilung und gegebenenfalls deren Änderung vergleichsweise genau zu erfassen weist die Elektrodenanordnung vorzugsweise mehrere, insbesondere voneinander getrennt angeordnete Abtastelektroden auf.

Eine bevorzugte Ausführung der Erfindung besteht darin, dass mehrere der Abtastelektroden einzeln an die Erfassungseinheit für eine getrennte Erfassung anschließbar sind. Hierdurch lässt sich eine Genauigkeit der Positionsbestimmung erhöhen.

Mehrere der Elektroden, insbesondere der Abtastelektroden können hierbei mittelbar über die Erfassungseinheit miteinander in Kontakt stehen, wobei jede Elektrode einzeln für sich mit der Erfassungseinheit verbunden ist.

Eine Elektrode der Elektrodenanordnung kann an einen Erfassungsanschluss der Erfassungseinheit derart angepasst sein, dass die Elektrode unmittelbar an die Erfassungseinheit elektrisch anschließbar ist. Vorzugsweise sind alle Elektroden der Elektrodenanordnung derart ausgebildet.

Eine Elektrode der Elektrodenanordnung kann als vergleichsweise dünnes, insbesondere flächig ausgedehntes Element, zum Beispiel in Form einer Platte und insbesondere einer Folie ausgebildet sein.

Des Weiteren ist es bevorzugt, dass die Elektrodenanordnung mindestens eine Feldelektrode umfasst, die zur Erzeugung eines elektrischen Feldes im Umgebungsbereich an der Seite des Möbels vorgesehen ist. Mit einer Feldelektrode kann ein elektrisches Feld bezüglich einem Bezugspotential in einer Umgebung des Möbels, zum Beispiel einem Erdungspotential eines Raumes oder Gebäudes, erzeugt werden. Dabei können mehrere Feldelektroden bereitgestellt sein, die gegebenenfalls auf gleiche oder auf verschiedene elektrische Potentiale gelegt sind. Dadurch lassen sich Einflüsse aus der Umgebung ausgleichen, die eine ungünstige Feldverteilung bewirken können. Beispielsweise kann eine zusätzliche Feldelektrode zur Verbindung mit einem Erdungspotential vorgesehen sein.

Vorzugsweise ist die Feldelektrode für eine Aufladung an die Erfassungseinheit anschließbar. Dadurch lässt sich die Feldstärke durch die Erfassungseinheit einstellen und z.B. steuern oder regeln.

Eine weitere bevorzugte Ausführung der Erfindung besteht darin, dass die Elektrodenanordnung ein Trägerelement umfasst, an dem die Abtastelektroden durch elektrisch isolierendes Material voneinander getrennt angebracht sind. Das Trägerelement kann zum Beispiel ein plattenförmiger starrer Körper oder zum Beispiel eine biegsame gegebenenfalls elastisch spannbare Folie sein. Die Elektroden können einzeln daran angebracht oder zum Beispiel durch Beschichtung auf einem Trägermaterial aufgebracht sein. Die Elektrodenanordnung lässt sich dadurch als eine Baugruppe bzw. als ein einzelnes Bauteil ausbilden, das sich vergleichsweise einfach montieren lässt. Am Trägerelement ist vorzugsweise die Feldelektrode elektrisch isoliert angebracht, um einen Einfluss einer der Abtastelektroden auf die Feldelektrode zu vermeiden.

Eine besonders bevorzugte Ausführung der Erfindung besteht darin, dass die Elektrodenanordnung an einer Leiterplatine ausgebildet ist. Dadurch lässt sich die Elektrodenanordnung vergleichsweise kostengünstig und dünn herstellen.

Der Umgebungsbereich, der vom elektrischen Feld für eine Überwachung durch die Elektrodenanordnung erfüllt ist, ist an einer vorzugsweise leicht zugänglichen Seite des Möbels gelegen. Dabei ist die Elektrodenanordnung am Möbelkorpus angeordnet. Dabei kann die Elektrodenanordnung in ein flächig erstrecktes Bauteil des Möbels, z.B. in eine Seitenwand, eingebettet sein. Außerdem kann die Elektrodenanordnung in eine Abdeckplatte eingebettet sein. Die Abdeckplatte kann zum Beispiel eine Deckenplatte oder eine Bodenplatte sein.

Die Erfassungseinheit kann eine mikroelektronische Schaltungsanordnung umfassen, mit der eine vergleichsweise schwache Änderung der Feldverteilung z.B. durch menschliches Körpergewebe zuverlässig messbar ist. Insbesondere ist es bevorzugt, dass die Erfassungseinheit als integriertes mikroelektronisches Bauelement ausgebildet ist, wodurch sich die Erfassungseinheit vergleichsweise einfach und platzsparend von äußeren, insbesondere elektromagnetischen Einflüssen abschirmen lässt. In einer vergleichsweise einfachen Ausführung kann die Erfassungseinheit Änderungen an den Elektroden, insbesondere an den Abtastelektroden derart aufbereiten, dass die Änderung in Form von z.B. verstärkten und z.B. normierten Signalen an eine weitere Elektronikeinheit übermittelbar sind. Eine vergleichsweise fortgeschrittene Ausführung der Erfassungseinheit nach dem Stand der Technik steht z.B. mit einem programmierbaren Mikrocontroller mit integrierter Signalverarbeitungseinheit zur Verfügung, mit dem sich eine Bewegung des durch die Elektrodenanordnung erfassten Körpers verfolgen und zusätzlich auswerten und verarbeiten lässt.

Vorzugsweise ist mit der Erfassungseinheit eine Folge von mehreren Positionen des dielektrischen Körpers im Umgebungsbereich eines Betätigungssignals zuordenbar. Die Erfassungseinheit wertet vorzugsweise die Positionen des Körpers relativ zueinander aus, das heißt nicht absolut, wobei eine Bewegung des Körpers als Geste mit mehreren unterschiedlichen Lagen erkennbar ist. Vorzugsweise ist die Erfassungseinheit für eine Erkennung von mehreren Gesten ausgebildet, wodurch einzelnen von mehreren, verschiedenen Betätigungsfunktionen jeweils eine Geste zu deren Auslösung und Steuerung zugeordnet sein kann.

Eine bevorzugte Ausführung der Erfindung besteht darin, dass das Möbel einen Aktor aufweist, der für eine Betätigung mit einer Sensoreinrichtung verbunden ist. Der Aktor kann zum Beispiel ein Antriebsmotor zum Verfahren eines beweglichen Möbelteils, ein Türöffner oder zum Beispiel eine Verriegelungseinrichtung des Möbels sein. Für eine in sich abgeschlossene Ausführung kann die Sensoreinrichtung unmittelbar mit einem Aktor oder mit mehreren Aktoren verbunden sein, wobei die Sensoreinrichtung vorzugsweise für einem Ansteuerung und Kontrolle der Aktoren mit einer gegebenenfalls integrierten Prozessoreinheit, z.B. als Systemon-Chip (SoC), ausgebildet sein kann. Außerdem kann ein Aktor mittelbar über eine Kontrolleinrichtung, z.B. eine separate Rechnereinheit, mit der Sensoreinrichtung verbunden sein, wodurch Signale und gegebenenfalls Daten nicht nur einem Aktor bzw. einer Betätigungs- bzw. Kontrollfunktion bereitgestellt werden können.

Wenn mittels der Elektrodenanordnung und der Erfassungseinheit eine vergleichsweise große Anzahl von verschiedenen Gesten erkennbar sind, können eine einzelne Elektrodenanordnung und eine einzelne Erfassungseinheit zur Betätigung von mehreren Aktoren und insbesondere von mehreren bewegbaren Möbelteilen eingesetzt werden.

### Beschreibung von Ausführungsbeispielen

Nachfolgend werden mehrere Ausführungsbeispiele zur vorliegenden Erfindung beschrieben und mit Hilfe der Zeichnungen näher erläutert. Die Ausführungsbeispiele sind in den Zeichnungen nicht maßstäblich dargestellt. Bezugszeichen werden in allen Figuren der Zeichnungen einheitlich verwendet. Es zeigen:
- Figur 1: eine schematische perspektivische Ansicht eines Ausschnitts eines erfindungsgemäßen Möbels,
- Figur 2: eine schematische Seitenansicht eines nicht erfindungsgemäßen Möbels,
- Figur 3: eine schematische Frontansicht einer Sensoreinheit,
- Figur 4: eine schematische Seitenansicht einer Elektrodenanordnung und
- Figur 5: eine schematische Seitenansicht einer weiteren Elektrodenanordnung.

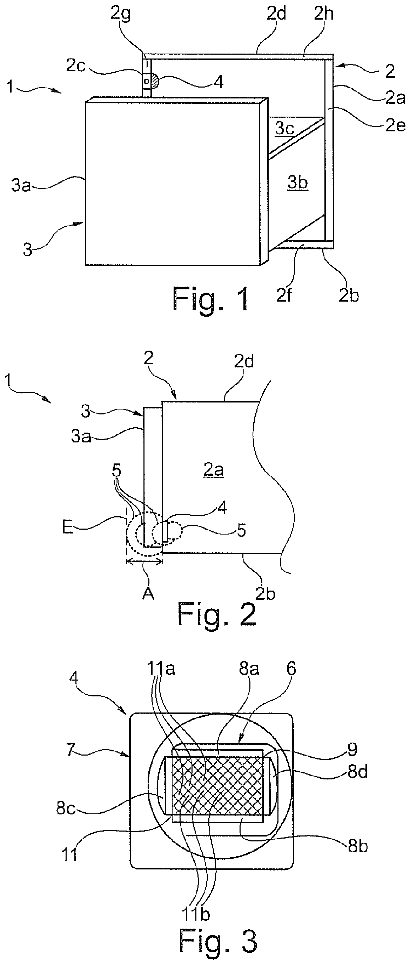

In Figur 1 ist eine Ausführung eines erfindungsgemäßen Möbels 1 ausschnittsweise gezeigt. Der Ausschnitt des Möbels 1 zeigt ein Möbelfach 2, in dem eine Schublade 3 zum Öffnen und Schließen verschiebbar gelagert ist. Das Möbelfach 2 ist durch Wandelemente 2a, 2b, 2c und 2d seitlich begrenzt.

Von der Schublade 3 sind neben einer Rückwand 3c und einer Seitenwand 3b eine Frontblende 3a dargestellt, die Stirnseiten 2e, 2f, 2g, 2h der Wandelemente 2a, 2b, 2c, 2d überdecken können. Am Wandelement 2c ist ein Sensorelement 4 angebracht, das in einer Ebene der frontseitigen Stirnseiten 2g und 2e der Wandelemente 2a und 2c liegt. Im Sensorelement 4 ist zumindest eine Elektrodenanordnung untergebracht, mit der ein Körper (nicht gezeigt) in einem Erfassungsbereich vor der Stirnseite 2g mit Hilfe des Sensorelements 4 erkennbar ist. Dabei kann das Sensorelement 4 eine Erfassungseinheit zum Beispiel in Form eines Mikrocontrollers umfassen, der gegebenenfalls auf die Elektrodenanordnung abgestimmt ist.

In der Figur 2 ist ein Ausführungsbeispiel eines nicht erfindungsgemäßen Möbels 1 gezeigt. Das Möbel 1 weist ebenfalls ein Möbelfach 2 mit mehreren Seitenelementen 2a, 2b und 2d auf, in dem eine Schublade 3 gelagert ist. Die Schublade 3 weist eine Frontblende auf, an deren Innenseite ein Sensorelement 4 angebracht ist. Das Sensorelement 4 umfasst zumindest eine Elektrodenanordnung 6, wie sie beispielsweise in Figur 3 gezeigt ist. Durch die Anbringung des Sensorelements 4 an der Frontblende 3a kann sich vorteilhaft der Erfassungsbereich des Sensorelements 4 mit der Schublade 3 mitbewegen. Vorzugsweise ist das Sensorelement 4 an einer markanten Position der Frontblende 3a zum Beispiel im Bereich einer Ecke oder zum Beispiel im Zentrum der Innenseite der Frontblende 3a angebracht. Dadurch ist der Erfassungsbereich des Sensorelements 4 leicht erinnerbar. Die im Sensorelement 4 untergebrachte Elektrodenanordnung erzeugt ein elektrisches Feld, das in Figur 2 mit Hilfe von Äquipotentiallinien 5 schematisch dargestellt ist. Eine an der Elektrodenanordnung 6 angelegte Spannung erzeugt dabei vorzugsweise ein elektrisches Feld, dessen Änderung in einer vor der Frontblende 3a liegenden Ebene E in einem Abstand A vom Sensorelement 4 erfassbar ist.

Wenn ein elektrisch polarisierbarer Körper (nicht gezeigt) zum Beispiel ein elektrischer Leiter (nicht gezeigt) oder ein Körperteil (nicht gezeigt), dessen Material eine vergleichsweise hohe Dielektrizitätszahl aufweist, in den Bereich des elektrischen Feldes der zum Beispiel durch die Äquipotentiallinie 5 beschrieben ist, eingeführt wird, ändert sich der Verlauf des elektrischen Feldes derart, dass eine Ladungsverschiebung zwischen den Elektroden stattfinden kann, die durch eine Erfassungseinheit (nicht gezeigt) messbar ist. Der dielektrische Körper kann zum Beispiel ein menschliches Körperteil wie beispielsweise eine Hand oder ein Finger sein. Vorzugsweise ist die im Sensorelement 4 untergebrachte Elektrodenanordnung auf die Größe eines solchen Körperteils abgestimmt, um eine irrtümliche Betätigung bzw. Auslösung des Sensors weitgehend zu vermeiden.

In Figur 3 ist ein Sensorelement 4 näher dargestellt. Eine Elektrodenanordnung 6 ist dabei in einem nicht leitenden Gehäuse 7, z.B. aus Kunststoff, untergebracht. Die Elektrodenanordnung 6 ist vorzugsweise eine mehrlagige Leiterplatine mit mehreren, elektrisch isolierten Leiterebenen, die z.B. aus Kupfer bestehen.

Die Elektrodenanordnung 6 weist mehrere Abtastelektroden 8a, 8b, 8c, 8d auf, die voneinander getrennt angeordnet sind. Die Abtastelektroden sind vorzugsweise in einer obersten Leiterschicht durch z.B. Ätzen bzw. durch z.B. Fräsen insbesondere streifenförmig ausgebildet und voneinander isoliert. Vorzugsweise sind die Abtastelektroden 8a, 8b, 8c, 8d um einen zentralen Flächenbereich 9 herum angeordnet, wobei insbesondere jeweils zwei der Abtastelektroden 8a, 8b, 8c, 8d einander paarweise bezüglich des zentralen Flächenbereichs 9 einander gegenüberliegen. In einer Ebene hinter der Rückseite der Abtastelektroden 8a, 8b, 8c, 8d ist eine Feldelektrode 11 angeordnet, die unter anderem den zentralen Flächenbereich 9 zwischen den Elektroden 8a, 8b, 8c, 8d im Hintergrund abdeckt.

Wenn die Abtastelektroden 8a - 8d beispielsweise an eine einlagigen Leiterplatine ausgebildet sind, kann der zentrale Flächenbereich 9 z.B. in Form eines insbesondere rechteckigen Fensters aus der Leiterplatine ausgeschnitten sein. Die Feldelektrode kann dann in materialsparender Form als Geflecht leitend miteinander verwobener Leiterdrähte oder Leiterstreifen, 11a und 11b, ausgebildet sein.

Vorzugsweise sind die Abmessungen der Abtastelektroden 8a - 8d sowie deren Abstände voneinander auf den Körper, insbesondere das Körperteil abgestimmt, das für eine Betätigung des Sensorelements 4 vorgesehen ist. Beispielsweise können die in den Figuren 1 und 2 gezeigten Sensorelemente 4 für eine Betätigung durch einen Finger, insbesondere eine Fingerspitze vorgesehen sein. Insbesondere kann die Fingerspitze an einer Oberfläche der Frontblende 3a nahe dem Sensorelement 4 bewegt werden, wobei gegebenenfalls eine von der Feldelektrode 11 erzeugte elektrische Feldstärke im Raum vor der Frontblende 3a ausreichend stark ist, um eine Berührung der Frontblende 3a vermeiden zu können. Durch ein Ende eines fingerförmigen Körpers lässt sich das elektrische Feld so verändern, dass die elektrische Feldstärke ungleichmäßig verteilt sein kann. Die ungleichmäßige Feldverteilung kann zu Ladungsverschiebungen zwischen den Abtastelektroden 8a - 8d führen, die in Form von Strömen von einer Erfassungseinheit (nicht gezeigt) messbar sind. Dem gegenüber kann eine ganze Hand, insbesondere mit nahe aneinander liegenden Fingern einen Feldverlauf zwar als ganzes beeinflussen, aber aufgrund des Größenverhältnisses gegenüber einem z.B. Finger kaum eine oder keine ungleichmäßige Veränderung der elektrischen Feldverteilung zwischen den Abtastelektroden 8a - 8d hervorrufen.

Die Feldelektrode 11 lässt sich zum Beispiel mit Hilfe der Erfassungseinheit (nicht gezeigt) auf ein elektrisches Potential legen, die ein außerhalb des Möbels 1 erfassbares elektrisches Feld erzeugt. Durch das von der Feldelektrode 11 erzeugte elektrische Potential werden in den Abtastelektroden 8a bis 8d durch Influenz Ladungsverschiebungen induziert, die von der Feldverteilung der elektrischen Feldstärke, die die Feldelektrode 11 erzeugt, abhängen. Vorzugsweise ist jede der Abtastelektroden 8a bis 8d getrennt von den übrigen Elektroden mit der Erfassungseinheit verbunden und derart an die Erfassungseinheit angeschlossen, dass Änderungen des Ladungszustands an jeder der Elektroden 8a bis 8d separat erfassbar sind.

Die Änderung des Ladungszustandes kann dabei durch eine Änderung des elektrischen Feldes im Erfassungsbereich zustande kommen, wenn ein dielektrischer Körper in den Erfassungsbereich eingeführt oder aus diesem entfernt wird. Mit einer Änderung einer induzierten Ladung in einer der Abtastelektroden 8a bis 8d ist ein elektrischer Strom verbunden, der zum Beispiel in der Erfassungseinheit messbar ist und dessen zeitlicher Verlauf gegebenenfalls eine Bewegung des dielektrischen Körpers im Erfassungsbereich verfolgen lässt.

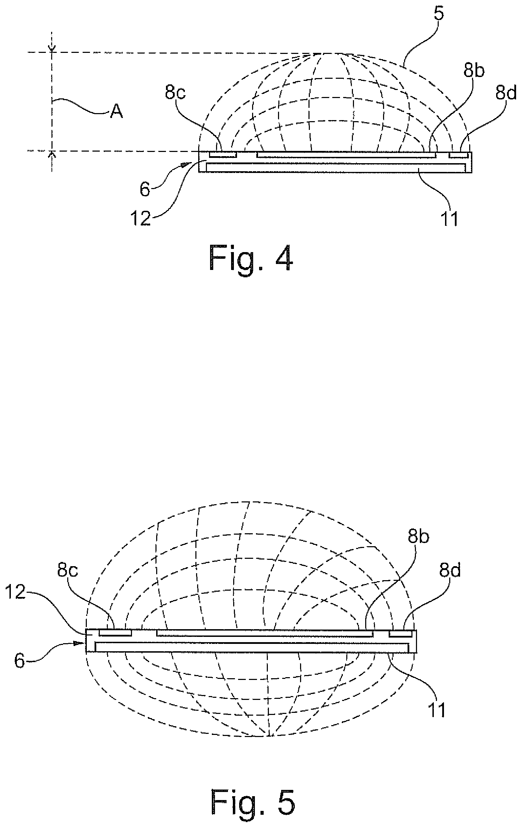

In Figur 4 ist eine Elektrodenanordnung 6 näher dargestellt, die vorzugsweise aus einer Leiterplatine hergestellt ist. An einer Oberseite einer Trägerschicht 12 sind mehrere, voneinander elektrisch isolierte Abtastelektroden aus z.B. Kupfer ausgebildet, von denen in der Figur die Abtastelektroden 8b, 8c und 8d dargestellt sind. An einer Unterseite der Trägerschicht 12 ist eine Feldelektrode 11 ausgebildet. Die Feldelektrode 11 kann zwei voneinander elektrische isolierte Lagen (nicht gezeigt) aufweisen, von denen eine obere Lage auf einem Feld erzeugenden erhöhten elektrischen Potential liegt und somit unter Spannung gegenüber einer zweiten Lage steht. Die zweite Lage kann beispielsweise mit einem Erdungspotential eines Stromversorgungsnetzes verbindbar sein. Durch die eingezeichneten Äquipotentiallinien 5 ist verdeutlicht, dass mit einer derartigen zweilagigen und zweipoligen Feldelektrode 11 im Wesentlichen nur an der Oberseite der Trägerschicht 12 ein elektrisches Feld in den Umgebungsbereich der Elektrodenanordnung erstreckt ist. Dabei markiert der Abstand A eine Grenze, bis zu der von der Oberfläche der Elektrodenanordnung 6 ausgehend ein elektrisches Feld bereitgestellt ist, mit dem eine Betätigung z.B. durch einen Finger oder z.B. durch eine Hand möglich ist. An einer Unterseite der Elektrodenanordnung 6 kann das elektrische Feld durch einen Erdungsschirm abgeschirmt sein. Die bietet den Vorteil, dass eine im abgeschirmten Bereich angeordnete elektronische Schaltung, z.B. ein mikroelektronisches Bauteil gegen EMV-Einflüsse der Elektrodenanordnung 6 abgeschirmt und dadurch vor einer Beschädigung oder einer Fehlfunktion geschützt sein kann.

In Figur 5 ist eine zweite Elektrodenanordnung 6 näher dargestellt, bei der von einer Feldelektrode 11 nur ein einziges elektrostatisches Potential bereitgestellt ist.

### Bezugszeichenliste:

- 1: Möbel
- 2: Möbelfach (an Frontseite des Möbels offen)
- 2a: Wandelement
- 2b: Wandelement
- 2c: Wandelement
- 2d: Wandelement
- 2e: Stirnseite
- 2f: Stirnseite
- 2g: Stirnseite
- 2h: Stirnseite
- 3: Schublade
- 3a: Frontblende
- 3b: Seitenwand
- 3c: Rückwand
- 4: Sensorelement
- 5: Äquipotentiallinie
- 6: Elektrodenanordnung
- 7: Gehäuse
- 8a: Abtastelektrode
- 8b: Abtastelektrode
- 8c: Abtastelektrode
- 8d: Abtastelektrode
- 9: Flächenbereich
- 11: Feldelektrode
- 11a: Metallstreifen
- 11b: Metallstreifen
- 12: Trägerschicht

## Patentansprüche

1. Möbel (1) mit einem Möbelkorpus (2), mit einer Schublade (3) und mit einer Sensoreinrichtung (4), wobei die Schublade (3) eine Rückwand (3c), eine Seitenwand (3b) und eine Frontblende (3a) ausweist und wobei die Schublade (3) am Möbelkorpus (2) verschiebbar gelagert ist, wobei der Möbelkorpus (2) Wandelemente (2a, 2b, 2c, 2d) aufweist, die den Möbelkorpus (2) seitlich begrenzen, wobei die Sensoreinrichtung (4) eine Elektrodenanordnung (6) umfasst, und dass die Sensoreinrichtung (4) eine Erfassungseinheit umfasst, mit der mittels einer erfassten Veränderung des elektrischen Feldes (5) eine Position eines Körpers im Umgebungsbereich des Möbels (1) bestimmbar ist, wobei die Elektrodenanordnung (6) am Möbelkorpus (2) des Möbels (1) derart angeordnet ist, dass mit der Elektrodenanordnung (6) mit oder ohne Berührung der Elektrodenanordnung bzw. des Möbels (1) Veränderungen eines elektrischen Feldes (5) im Umgebungsbereich erfassbar sind, wobei der Umgebungsbereich vor einer der frontseitigen Stirnseiten (2f, 2h, 2g, 2e) der Wandelemente (2a, 2b, 2c, 2d) des Möbelkorpus (2) gelegen ist, wobei die Sensoreinrichtung (4) in einer Ebene liegt, die durch frontseitige Stirnseiten (2g, 2e) der Wandelemente (2a, 2c) definiert wird, **dadurch gekennzeichnet, dass** an einem der Wandelemente (2a, 2c) des Möbelkorpus (2) die Sensoreinrichtung (4) angebracht ist, wobei die Frontblende (3a) der Schublade (3) Stirnseiten (2e, 2f, 2g, 2h) der Wandelemente (2a, 2b, 2c, 2d) mit daran angeordneter Sensoreinrichtung (4) überdeckt, wobei an einer überdeckten Stirnseite (2e, 2f, 2g, 2h) eines Wandelements (2a, 2b, 2c, 2d) die Sensoreinrichtung (4) angebracht ist.

2. Möbel (1) nach Anspruch 1, **dadurch gekennzeichnet, dass** die Elektrodenanordnung (6) mehrere Abtastelektroden (8a, 8b, 8c, 8d) umfasst.

3. Möbel (1) nach dem vorgenannten Anspruch 2, **dadurch gekennzeichnet, dass** mehrere der Abtastelektroden (8a, 8b, 8c, 8d) einzeln an die Erfassungseinheit für eine getrennte Erfassung anschließbar sind.

4. Möbel (1) nach einem der vorgenannten Ansprüche, **dadurch gekennzeichnet, dass** die Elektrodenanordnung (6) mindestens eine Feldelektrode (11) umfasst, die zur Erzeugung des elektrischen Feldes (5) im Umgebungsbereich vorgesehen ist.

5. Möbel (1) nach dem vorgenannten Anspruch 4, **dadurch gekennzeichnet, dass** die Feldelektrode (11) für eine Aufladung an die Erfassungseinheit anschließbar ist.

6. Möbel (1) nach einem der vorgenannten Ansprüche 2 oder 3, **dadurch gekennzeichnet, dass** die Elektrodenanordnung (6) ein Trägerelement (12) umfasst, an dem die Abtastelektroden (8a, 8b, 8c, 8d) durch elektrisch isolierendes Material voneinander getrennt angebracht sind.

7. Möbel (1) nach den vorgenannten Ansprüchen 4 und 6, **dadurch gekennzeichnet, dass** am Trägerelement (12) die Feldelektrode (11) elektrisch isoliert angebracht ist.

8. Möbel (1) nach einem der vorgenannten Ansprüche, **dadurch gekennzeichnet, dass** die Elektrodenanordnung (6) an einer Leiterplatine ausgebildet ist.

9. Möbel (1) nach einem der vorgenannten Ansprüche, **dadurch gekennzeichnet, dass** mit der Erfassungseinheit eine Folge von mehreren Positionen des dielektrischen Körpers im Umgebungsbereich einem Betätigungssignal zuordenbar ist.

10. Möbel (1) nach einem der vorgenannten Ansprüche, **dadurch gekennzeichnet, dass** das Möbel (1) einen Aktor aufweist, der für eine Betätigung mit der Sensoreinrichtung (4) verbunden ist.

## Claims

1. Piece of furniture (1) with a furniture body (2), with a drawer (3) and with a sensor device (4), wherein the drawer (3) has a rear wall (3c), a side wall (3b) and a front panel (3a), and wherein the drawer (3) is displaceably mounted on the furniture body (2), wherein the furniture body (2) has wall elements (2a, 2b, 2c, 2d) which laterally bound the furniture body (2), wherein the sensor device (4) comprises an electrode arrangement (6), and the sensor device (4) comprises a detection unit by means of which a position of a body in the surrounding region of the piece of furniture (1) can be determined by means of a detected change in the electric field (5), wherein the electrode arrangement (6) is arranged on the furniture body (2) of the piece of furniture (1) in such a way that, by using the electrode arrangement (6), changes in an electric field (5) in the surrounding region can be detected with or without touching the electrode arrangement or the piece of furniture (1), wherein the surrounding region is located in front of one of the front end faces (2f, 2h, 2g, 2e) of the wall elements (2a, 2b, 2c, 2d) of the furniture body (2), wherein the sensor device (4) is in a plane which is defined by front end faces (2g, 2e) of the wall elements (2a, 2c), **characterized in that** the sensor device (4) is attached to one of the wall elements (2a, 2c) of the furniture body (2), wherein the front panel (3a) of the drawer (3) covers end faces (2e, 2f, 2g, 2h) of the wall elements (2a, 2b, 2c, 2d) with the sensor device (4) arranged thereon, wherein the sensor device (4) is attached to a covered end face (2e, 2f, 2g, 2h) of a wall element (2a, 2b, 2c, 2d).

2. Piece of furniture (1) according to Claim 1, **characterized in that** the electrode arrangement (6) comprises a plurality of probe electrodes (8a, 8b, 8c, 8d) .

3. Piece of furniture (1) according to the previous Claim 2, **characterized in that** a plurality of the probe electrodes (8a, 8b, 8c, 8d) can be connected individually to the detection unit for separate detection.

4. Piece of furniture (1) according to one of the previous claims, **characterized in that** the electrode arrangement (6) comprises at least one field electrode (11) which is provided to generate the electric field (5) in the surrounding region.

5. Piece of furniture (1) according to the previous Claim 4, **characterized in that** the field electrode (11) can be connected for charging to the detection unit.

6. Piece of furniture (1) according to either of the previous Claims 2 and 3, **characterized in that** the electrode arrangement (6) comprises a carrier element (12) to which the probe electrodes (8a, 8b, 8c, 8d) are attached, separated from one another by electrically insulating material.

7. Piece of furniture (1) according to the previous Claims 4 and 6, **characterized in that** the field electrode (11) is attached, electrically insulated, to the carrier element (12).

8. Piece of furniture (1) according to one of the previous claims, **characterized in that** the electrode arrangement (6) is formed on a circuit board.

9. Piece of furniture (1) according to one of the previous claims, **characterized in that** a sequence of a plurality of positions of the dielectric body in the surrounding region can be assigned to an actuation signal by the detection unit.

10. Piece of furniture (1) according to one of the previous claims, **characterized in that** the piece of furniture (1) comprises an actuator that is connected to the sensor device (4) for actuation.

## Revendications

1. Meuble (1) comprenant un corps de meuble (2), avec un tiroir (3) et avec un dispositif capteur (4), le tiroir (3) possédant une paroi arrière (3c), une paroi latérale (3b) et un cache avant (3a) et le tiroir (3) étant monté de manière coulissante sur le corps de meuble (2), le corps de meuble (2) possédant des éléments de paroi (2a, 2b, 2c, 2d) qui délimitent latéralement le corps de meuble (2), le dispositif capteur (4) comportant un arrangement d'électrodes (6), et le dispositif capteur (4) comportant une unité de détection avec laquelle peut être déterminée une position d'un corps dans la zone environnante du meuble (1) au moyen d'une modification détectée du champ électrique (5), l'arrangement d'électrodes (6) étant disposé au niveau du corps de meuble (2) du meuble (1) de telle sorte que les modifications d'un champ électrique (5) dans la zone environnante peuvent être détectées avec l'arrangement d'électrodes (6) avec ou sans toucher l'arrangement d'électrodes (6) ou le meuble (1), la zone environnante étant située devant l'un des côtés frontaux côté avant (2f, 2h, 2g, 2e) des éléments de paroi (2a, 2b, 2c, 2d) du corps de meuble (2), le dispositif capteur (4) se trouvant dans un plan qui est défini par des côtés frontaux côté avant (2g, 2e) des éléments de paroi (2a, 2c), **caractérisé en ce que** le dispositif capteur (4) est monté sur l'un des éléments de paroi (2a, 2c) du corps de meuble (2), le cache avant (3a) du tiroir (3) recouvrant les côtés frontaux (2e, 2f, 2g, 2h) des éléments de paroi (2a, 2b, 2c, 2d) avec le dispositif capteur (4) qui est disposé à son niveau, le dispositif capteur (4) étant monté au niveau d'un côté frontal (2e, 2f, 2g, 2h) recouvert d'un élément de paroi (2a, 2b, 2c, 2d) .

2. Meuble (1) selon la revendication 1, **caractérisé en ce que** l'arrangement d'électrodes (6) comporte plusieurs électrodes de palpage (8a, 8b, 8c, 8d).

3. Meuble (1) selon la revendication précédente 2, **caractérisé en ce que** plusieurs électrodes de palpage (8a, 8b, 8c, 8d) peuvent être raccordées individuellement à l'unité de détection pour une détection séparée.

4. Meuble (1) selon l'une des revendications précédentes, **caractérisé en ce que** l'arrangement d'électrodes (6) comporte au moins une électrode de champ (11) qui est prévue pour la génération d'un champ électrique (5) dans la zone environnante.

5. Meuble (1) selon la revendication précédente 4, **caractérisé en ce que** l'électrode de champ (11) peut être raccordée à l'unité de détection pour une charge.

6. Meuble (1) selon l'une des revendications précédentes 2 ou 3, **caractérisé en ce que** l'arrangement d'électrodes (6) comporte un élément porteur (12) sur lequel les électrodes de palpage (8a, 8b, 8c, 8d) sont montées séparées les unes des autres par un matériau électriquement isolant.

7. Meuble (1) selon les revendications précédentes 4 et 6, **caractérisé en ce que** l'électrode de champ (11) est montée sur l'élément porteur (12) de manière isolée électriquement.

8. Meuble (1) selon l'une des revendications précédentes, **caractérisé en ce que** l'arrangement d'électrodes (6) est formé sur une carte de circuit imprimé.

9. Meuble (1) selon l'une des revendications précédentes, **caractérisé en ce qu'**avec l'unité de détection, une séquence de plusieurs positions du corps diélectrique dans la zone environnante peut être associée à un signal d'actionnement.

10. Meuble (1) selon l'une des revendications précédentes, **caractérisé en ce que** le meuble (1) possède un actionneur qui est relié au dispositif capteur (4) pour un actionnement.
